# EUROPÄISCHE PATENTANMELDUNG

(11) **EP 2 508 733 A1**
(43) Veröffentlichungstag der Anmeldung: **10.10.2012**
(21) Anmeldenummer: 11161499.6
(22) Anmeldetag: 07.04.2011
(51) Int. Cl.: F02C 7/18, F01D 5/18

(54) **Gasturbine mit einer gekühlten Turbinenstufe und Verfahren zum Kühlen der Turbinenstufe**

(71) Anmelder: Siemens Aktiengesellschaft, 80333 München (DE)
(72) Erfinder: Bolms, Hans-Thomas, 45481, Mülheim an der Ruhr (DE); Dobrzynski, Boris, 40476, Düsseldorf (DE)

(57) **Zusammenfassung**

Eine Gasturbine mit einer Turbinenstufe (8) weist eine von einem Kühlmedium gekühlt betreibbare Leitschaufel (11) und eine Kühlmediumszuführeinrichtung (19 bis 24) zum Zuführen des Kühlmediums in das Innere der Leitschaufel (11) auf, die im Bereich ihrer Hinterkante (16) an ihrer Druckseite (18) mindestens eine Kühlmediumsaustrittsöffnung (25) hat, durch die das Kühlmedium aus dem Inneren der Leitschaufel (11) in die Hauptströmung ausströmbar ist, wobei die Kühlmediumszuführeinrichtung (19 bis 24) eine Massenstromsteuerungseinrichtung (20) zum Steuern des Massenstroms durch die mindestens eine Kühlmediumsaustrittsöffnung (25) aufweist, mit der der Massenstrom durch die mindestens eine Kühlmediumsaustrittsöffnung (25) im Teillastbetrieb der Gasturbine (1) verglichen mit dem Volllastbetrieb der Gasturbine (1) vergrößerbar ist.

## Beschreibung

Die Erfindung betrifft eine Gasturbine mit einer Turbinenstufe, die eine von einem Kühlmedium gekühlt betreibbare Leitschaufel und eine Kühlmediumszuführeinrichtung zum Zuführen des Kühlmediums in das Innere der Leitschaufel aufweist, und ein Verfahren zum Kühlen der Turbinenstufe.

Eine Gasturbine ist beispielsweise in einem Kraftwerk zur Erzeugung von elektrischer Energie mit einem Generator gekuppelt und wird sowohl im Teillastbetrieb als auch im Volllastbetrieb bei derselben Drehzahl betrieben. Die Gasturbine weist einen Verdichter, eine Brennkammer und eine Turbine auf, wobei von dem Verdichter Umgebungsluft angesaugt und verdichtet wird, die in der Brennkammer unter Verbrennung eines Brennstoffs erhitzt wird. Die erhitzte und verdichtete Luft wird in der Turbine arbeitsleistend entspannt, wobei mit dem dadurch gewonnen Arbeitsüberschuss der Generator angetrieben wird. Herkömmlich ist die Turbine in Axialbauweise konstruiert, wobei Leitschaufelreihen und Laufschaufelreihen in Hauptströmungsrichtung sich abwechselnd und hintereinander angeordnet sind. Zur Erzielung eines möglichst hohen thermodynamischen Wirkungsgrads der Gasturbine ist es erstrebenswert, die Gasturbine bei einer möglichst hohen Turbineneintrittstemperatur zu fahren. Die maximal zulässige Turbineneinrittstemperatur ergibt sich aus der thermischen Belastbarkeit der Turbine, insbesondere der Leitschaufelreihen und der Laufschaufelreihen der Turbine.

Eine Steigerung der maximal zulässigen Turbineneintrittstemperatur ist dann möglich, wenn beispielsweise die erste Leitschaufelreihe unmittelbar hinter dem Brennkammeraustritt gekühlt wird. Zum Kühlen der Leitschaufelreihe ist es bekannt, die Leitschaufeln der Leitschaufelreihe hohl auszubilden und mit Kühlluft zu durchströmen, die beispielsweise von dem Verdichter entnommen wird.

Wird die Gasturbine im Teillastbetrieb gefahren, senken sich die Turbineneintrittstemperatur und das Gesamtdruckverhältnis der Gasturbine ab, verglichen mit dem Volllastbetrieb der Gasturbine, wodurch der thermodynamische Wirkungsgrad der Gasturbine im Teillastbetrieb nachteilig abgesenkt ist. Außerdem ist im Teillastbetrieb der Gasturbine der Gesamtmassenstrom der Hauptströmung durch die Gasturbine reduziert, wodurch sich nachteilig die relativen Zuströmwinkel der Turbinenlaufschaufeln, insbesondere der Turbinenlaufschaufeln der Laufschaufelreihe hinter der ersten Leitschaufelreihe, verglichen mit den Zuströmwinkeln im Auslegungszustand unterscheiden. Dies führt im Teillastbetrieb der Gasturbine zu einer Fehlanströmung der Turbinenlaufschaufeln, wodurch die Arbeitsumsetzung in den Turbinenlaufschaufeln nachteilig herabgesetzt ist. Ferner wird beim Teillastbetrieb der Gasturbine die Brennstoffzufuhr in die Brennkammer abgesenkt, wodurch die Flammtemperatur in der Gasturbine erniedrigt wird. Dadurch können in der Brennkammer nachteilige Verbrennungsinstabilitäten auftreten, die den Betrieb und die Verfügbarkeit der Gasturbine im Teillastbetrieb beeinträchtigen.

Wird die Gasturbine ausgehend vom Volllastbetrieb in den Teillastbetrieb gefahren, so senken sich die einzelnen Stufendruckverhältnisse und somit das Gesamtdruckverhältnis der Gasturbine ab und die Abgastemperatur steigt bei im Wesentlichen gleichbleibender Turbineneintrittstemperatur. Dadurch kann ein Betriebszustand eintreten, bei dem die Abgastemperatur einen maximal zulässigen Höchstwert überschreitet. Eine adäquate Reaktion darauf wäre es in diesem Teillastbetrieb die Turbineneintrittstemperatur abzusenken, damit die Abgastemperatur wieder gleich oder kleiner ihres maximal zulässigen Höchstwerts ist, womit allerdings nachteilig eine Absenkung des thermodynamischen Wirkungsgrads der Gasturbine einhergeht.

Aufgabe der Erfindung ist es eine Gasturbine und ein Verfahren zum Kühlen einer Turbinenstufe der Gasturbine zu schaffen, wobei die Gasturbine im Teillastbereich stabil bei einem hohen thermodynamischen Wirkungsgrad betreibbar ist.

Die erfindungsgemäße Gasturbine mit einer Turbinenstufe weist eine von einem Kühlmedium gekühlt betreibbare Leitschaufel und eine Kühlmediumszuführeinrichtung zum Zuführen des Kühlmediums in das Innere der Leitschaufel auf, die im Bereich ihrer Hinterkante an der Druckseite mindestens eine Kühlmediumsaustrittsöffnung hat, durch die das Kühlmedium aus dem Inneren der Leitschaufel in die Hauptströmung ausströmbar ist, wobei die Kühlmediumszuführeinrichtung eine Massenstromsteuerungseinrichtung zum Steuern des Massenstroms durch die mindestens eine Kühlmediumsaustrittsöffnung aufweist, mit der der Massenstrom durch die mindestens eine Kühlmediumsaustrittsöffnung im Teillastbetrieb der Gasturbine verglichen mit dem Volllastbetrieb der Gasturbine vergrößerbar ist. Das erfindungsgemäße Verfahren zum Kühlen der Turbinenstufe der Gasturbine weist die Schritte auf: Betreiben der Gasturbine im Teillastbetrieb; Steuern der Massenstromsteuerungseinrichtung, dass der Massenstrom durch die mindestens eine Kühlmediumsaustrittsöffnung erhöht ist verglichen mit dem Massenstrom durch die mindestens eine Kühlmediumsaustrittsöffnung im Volllastbetrieb der Gasturbine.

Die von dem Kühlmedium gekühlt betriebbare Leitschaufel ist derart ausgelegt, dass sie im Volllastbetrieb unter Zufuhr eines entsprechend ausreichend großen Massenstroms von dem Kühlmedium im Auslegungspunkt mit ausreichend langer Lebensdauer betriebbar ist. Bei der Auslegung der Leitschaufel ist berücksichtigt, dass der Massenstrom von dem Kühlmedium so groß ist, dass durch die Kühlwirkung des Kühlmediums auf die Leitschaufel eine thermische Überbelastung der Leitschaufel unterbunden ist. Die Profilierung der Leitschaufel ist so gewählt, dass unter Berücksichtigung der Kühlwirkung durch das Kühlmedium und dessen aerodynamischen Einfluss die Leitschaufel im Auslegungspunkt definierte Auslegungsanforderungen erfüllt.

Durch das druckseitige Ausströmen des Kühlmediums durch die mindestens eine Kühlmediumsaustrittsöffnung im Bereich der Hinterkante der Leitschaufel ist die Umlenkwirkung der Leitschaufel verstärkt, verglichen mit der Umlenkwirkung der Leitschaufel bei geringerem oder keinem Ausströmen des Kühlmediums durch die mindestens eine Kühlmediumsaustrittsöffnung im Bereich der Hinterkante der Leitschaufel. Wird also mit Hilfe der Massenstromsteuerungseinrichtung beim Betrieb der Gasturbine der Massenstrom des Kühlmediums erhöht, das druckseitig aus der mindestens einen Kühlmediumsaustrittsöffnung ausströmt, wird als Folge davon die Umlenkwirkung der Leitschaufel verstärkt.

Die Erhöhung des Massenstroms des Kühlmediums wäre aus Hinsicht des notwendigen Kühlungseffekts durch das Kühlmedium nicht erforderlich. Die Erhöhung des Massenstroms des Kühlmediums bewirkt eine Verstärkung der Umlenkwirkung der Leitschaufel. Somit ist beim Betrieb der Leitschaufel bei erhöhtem Massenstrom des Kühlmediums, das druckseitig von der Leitschaufel im Bereich ihrer Hinterkante abströmt, der Umlenkwinkel der Leitschaufel durch eine entsprechende Wahl des Massenstrom des Kühlmediums einstellbar, obwohl die Leitschaufel von dem Kühlmedium ausreichend gekühlt betrieben ist.

Dies ist insbesondere Vorteilhaft im Teillastbetrieb der Gasturbine, bei dem die Umlenkwirkung der Leitschaufel nachteilig herabgesetzt ist. Dieser Herabsetzung kann vorteilhaft entgegengewirkt werden, indem mit der Massenstromsteuerungseinrichtung zum Steuern des Massenstroms durch die mindestens eine Kühlmediumsaustrittsöffnung der Massenstrom durch die mindestens eine Kühlmediumsaustrittsöffnung im Teillastbetrieb der Gasturbine verglichen mit dem Volllastbetrieb der Gasturbine vergrößert wird. Dadurch ist im Teillastbetrieb der Gasturbine die Umlenkwirkung der Leitschaufel vorteilhaft vergrößerbar, wobei die Leitschaufel dennoch in ausreichendem Maße gekühlt ist. Außerdem kann durch eine entsprechende Betätigung der Massenstromsteuerungseinrichtung der Massenstrom des Kühlmediums durch die mindestens eine Kühlmediumsaustrittsöffnung derart justiert werden, dass sich das Stufendruckverhältnis über die Leitschaufel und die Laufschaufel erhöht. Die Erhöhung des Stufendruckverhältnisses ermöglicht eine Erhöhung der Turbineneintrittstemperatur bei gleichbleibender Abgastemperatur, womit eine Erhöhung des thermodynamischen Wirkungsgrads und der spezifischen Leistung der Gasturbine einhergeht.

Bevorzugtermaßen weist die Massenstromsteuerungseinrichtung ein Drosselventil zur Massenstromsteuerung auf und die Leitschaufel ist im Volllastbetrieb für einen von dem Drosselventil angedrosselten Massenstrom des Kühlmediums ausgelegt. Außerdem ist es bevorzugt, dass die Leitschaufel im Teillastbetrieb für einen von dem Drosselventil ungedrosselten Massenstrom des Kühlmediums ausgelegt ist. Das Kühlmedium ist bevorzugt Verdichterendluft und die Massenstromsteuerungseinrichtung ist bevorzugt von dem Verdichterende mit der Verdichterendluft gespeist.

Die Verdichtendluft ist bevorzugt im Teillastbetrieb der Gasturbine an der Brennkammer vorbeigeführt. Die Verdichterendluft ist im Teillastbetrieb der Gasturbine an der Brennkammer beispielsweise deshalb vorbeigeführt, um beim Absenken der Turbineneintrittstemperatur ein zu starkes Abfallen der Flammtemperatur zu vermeiden und Verbrennungsinstabilitäten zu unterbinden. Die im Teillastbetrieb an der Brennkammer vorbeigeführte Verdichterendluft ist überschüssig und steht somit bevorzugt der Kühlmediumszuführeinrichtung zum Kühlen der Leitschaufel zur Verfügung.

Im Teillastbetrieb ist die Massenstromsteuerungseinrichtung bevorzugt ungedrosselt betrieben, wobei die an der Brennkammer vorbeigeführte Verdichterendluft zum Kühlen der Leitschaufel verwendet wird. Wird hingegen die Gasturbine bei Volllast betrieben, so ist das Drosselventil der Massenstromsteuerungseinrichtung angedrosselt, wodurch der Massenstrom des Kühlmediums reduziert ist. Diese Reduzierung des Massenstroms des Kühlmediums ist bevorzugt so zu wählen, dass stets sowohl eine ausreichende Kühlung als auch eine ausreichende Umlenkwirkung der Leitschaufel beim Betrieb der Gasturbine gegeben sind.

Die Leitschaufel weist bevorzugt einen Kühlmediumseintritt, durch die das Kühlmedium in das Innere der Leitschaufel einströmbar ist, und ein Kühlmediumsreservoir auf, mit dem am Kühlmediumseintritt das Kühlmedium von der Massenstromsteuerungseinrichtung bereitgestellt ist. Das Kühlmediumsreservoir wird vorteilhaft als ein Pufferbehälter für das Kühlmedium bereitgestellt, so dass von dem Kühlmediumsreservoir insbesondere ein starker instationärer Bedarf an dem Kühlmedium von der Leitschaufel kompensierbar ist. Außerdem ist in dem Kühlmediumsreservoir das Niveau der Strömungsgeschwindigkeiten niedrig, so dass in dem Kühlmediumsreservoir Strömungsverluste gering sind.

Bevorzugtermaßen ist die Massenstromsteuerungseinrichtung von einem Verdichterplenum der Gasturbine gespeist. In das Verdichterplenum ist insbesondere der Anteil der Verdichterendluft geleitet, der im Teillastbetrieb der Gasturbine an der Brennkammer vorbeigeführt ist. Außerdem herrscht im Verdichterplenum der Verdichterenddruck, so dass in dem Verdichterplenum das Kühlmedium mit einem ausreichend hohem Druck zum entsprechenden Drosseln bevorzugt mit dem Drosselventil bereitgestellt ist.

Die gekühlte Leitschaufel ist bevorzugt die erste, unmittelbar stromab der Brennkammer der Gasturbine angeordnete Leitschaufel der ersten Turbinenstufe der Gasturbine. Außerdem ist es gemäß dem erfindungsgemäßen Verfahren bevorzugt, dass der Massenstrom derart eingestellt wird, dass der Teilbetrieb der Gasturbine in Bezug auf den thermodynamischen Wirkungsgrad und/oder den Anströmwinkel der stromab der Leitschaufel angeordneten Laufschaufel und/oder die Abgastemperatur der Turbine der Gasturbine und/oder die Flammstabilität in der Brennkammer der Gasturbine optimiert ist.

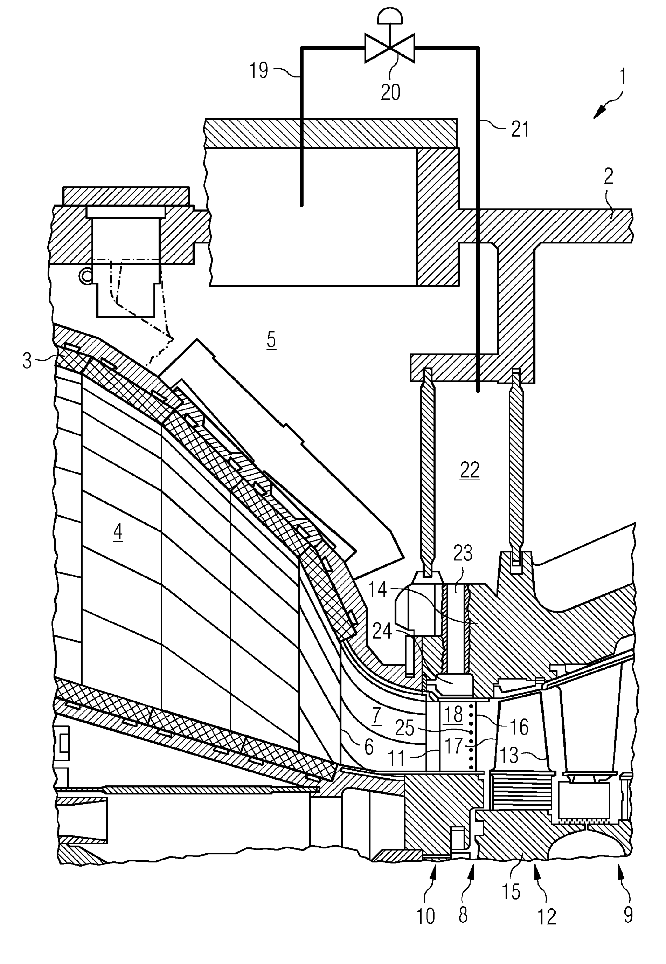

Im Folgenden wird anhand der beigefügten schematischen Zeichnung die Erfindung näher erläutert. Es zeigt die Figur einen Längsschnitt durch eine erfindungsgemäße Ausführungsform der Gasturbine im Bereich der Brennkammer und der Turbine.

Wie es aus der Figur ersichtlich ist, weist eine Gasturbine 1 ein Gehäuse 2 auf, in dem ein Verdichter (nicht gezeigt), eine Brennkammer 3 und eine Turbine angeordnet sind, die mehrere Turbinenstufen 8, 9 aufweist. Stromab des Verdichterendes ist ein Umlenkdiffusor (nicht gezeigt) angeordnet, der in einen als ein Hohlraum in dem Gehäuse 3 ausgebildetes Verdichterplenum 5 mündet, in dem die Brennkammer 3 angeordnet ist. Beim Betrieb der Gasturbine 1 wird von dem Verdichter Umgebungsluft angesaugt und auf einen Verdichterenddruck verdichtet. Von dem Verdichterende tritt die Verdichterendluft in den Brennkammerinnenraum 4 der Brennkammer 3 ein und wird mit einem flüssigen oder gasförmigen Brennstoff vermischt. Dadurch entsteht im Brennkammerinnenraum 4 ein brennbares Gemisch, das gezündet und in der Brennkammer 3 verbrannt wird. Die Verbrennung in dem Brennkammerinnenraum 4 erfolgt im Wesentlichen isobar. Am Brennkammeraustritt 6 der Brennkammer 3 hat das Gemisch eine durch die Verbrennung entsprechend bewirkte hohe Temperatur und wird via einen Übergangskanal 7 zu der Turbine der Gasturbine 1 geführt.

Von der Turbine sind in der Figur eine erste Turbinenstufe 8 und eine zweite Turbinenstufe 9 dargestellt. Jede Turbinenstufe 8, 9 weist eine Leitschaufelreihe 10 und eine Laufschaufelreihe 12 auf. Die Leitschaufelreihe 10 der ersten Turbinenstufe 8 ist gebildet von einer Mehrzahl an über den Umfang äquidistant angeordneten, gleichen Leitschaufeln 11. Die Laufschaufelreihe 12 der ersten Turbinenstufe 8 ist gebildet von einer äquidistant über dem Umfang angeordneten, gleichen Laufschaufeln 13. Die Leitschaufeln 11 und die Laufschaufeln 13 sind in Axialbausweise ausgeführt. Die Leitschaufeln 11 sind an ihren radial außenliegenden Enden von einem Leitschaufelträger 14 gehalten. Die Laufschaufeln 13 sind an ihren radial innenliegenden Enden jeweils mit einem Schaufelfuß ausgestattet, der mit einem Rotor 15 der Gasturbine 1 formschlüssig in Eingriff steht. Jede Leitschaufel 11 weist ein Schaufelblatt mit einer Hinterkante 16, einer Vorderkante sowie einer Saugseite (nicht gezeigt) und einer Druckseite 18 auf. Im Bereich der Vorderkanten der Leitschaufeln 11 tritt das in dem Übergangskanal 7 herangeführte Heißgasgemisch in die erste Turbinenstufe 8 ein, wobei von der Leitschaufelreihe 10 das Heißgasgemisch umgelenkt wird und in der Laufschaufelreihe 12 unter Abgabe von Arbeit entspannt wird.

Je höher die Turbineneintrittstemperatur des Heißgasgemischs ist, desto höher ist der thermodynamische Wirkungsgrad der Gasturbine 1. Thermische Belastungsgrenzen des Werkstoffs der Leitschaufeln 11 ergeben eine maximal zulässige Turbineneintrittstemperatur. Zur Erhöhung der maximal zulässigen Turbineneintrittstemperatur werden die Leitschaufeln 11 beim Betrieb der Gasturbine 1 gekühlt, um die thermische Belastung der Leitschaufeln 11 herabzusetzen. Hierfür sind die Leitschaufeln 11 hohl ausgeführt, wobei die Leitschaufeln 11 von einem Kühlmedium zum Kühlen durchströmt werden.

Die Gasturbine weist als eine Kühlmediumszuführeinrichtung eine Abzapfleitung 19, ein Drosselventil 20, eine Zuführleitung 21, ein Kühlluftreservoir 22, einen Kühllufteintritt 23 und eine Kammer 24 auf, wobei das Drosselventil 20 als Massenstromsteuerungseinrichtung ausgeführt ist. Die Abzapfleitung 19 ist an das Verdichterplenum 5 fluidleitend angeschlossen und geht via das Drosselventil 20 in die Zuführleitung 21 über. Die Zuführleitung 21 mündet in das Kühlluftreservoir 22, das radial außerhalb des Leitschaufelkranzes 10 angeordnet ist und als ein Ringraum ausgebildet ist. Unmittelbar radial außenseitig der Leitschaufeln 11 und konzentrisch zum Kühlluftreservoir 24 ist die Kammer 24 angeordnet, die in die Innenräume der Leitschaufeln 11 mündet. Der Radialabstand zwischen der Kammer 24 und dem Kühllustreservoir 22 ist für jede Leitschaufel 11 mit dem Kühllufteintritt 23 überbrückt.

Die Verdichterendluft strömt von dem Verdichterende via den Umlenkdiffusor in das Verdichterplenum 5, in dem die Verdichterluft als das Kühlmedium (Kühlluft) bereitgestellt ist. Von dem Verdichterplenum 5 wird die Kühlluft mit der Abzapfleitung 19 abgezapft. Je nach Androsselung des Drosselventils 20 ergibt sich ein entsprechender Kühlluftmassenstrom in der Abzapfleitung 19 und der Zuführleitung 21. Von der Zuführleitung 21 strömt die Kühlluft in das Kuhlluftreservoir 22 und wird in dem Kühlluftreservoir 22 bereitgestellt. Der Druck der Kühlluft in dem Kühlluftreservoir 22 ergibt sich insbesondere aus dem Kühlluftmassenstrom, der durch den Kühllufteintritt 23 aus dem Kühlluftreservoir 22 abströmt, dem Kühlluftmassenstrom, der durch die Zuführleitung 21 in das Kühlluftreservoir 22 zuströmt, und der Androsselstellung des Drosselventils 20. Von dem Kühlluftreservoir 22 strömt die Kühlluft via den Kühllufteintritt 23 in die Kammer 24, von wo aus die Kühlluft in die Innenräume der Leitschaufeln 11 strömt. Die Leitschaufeln 11 weisen im Bereich ihrer Hinterkanten 16 an ihren Druckseiten 18 jeweils eine im Wesentlichen radial verlaufende Reihe an Kühlluftaustrittsöffnungen 25 auf, durch die die Kühlluft aus dem Inneren der Leitschaufeln 11 in die Hauptströmung ausströmt.

Die Querschnitte der Abzapfleitung 19, der Zuführleitung 21 und des Kühllufteintritts 23 sind so dimensioniert, dass die Leitschaufel 11 im Volllastbetrieb der Gasturbine 1 mit einem derart hohen Kühlluftmassenstrom versorgt werden, dass, wenn das Drosselventil 20 eine bestimmte Androsselstellung hat, eine ausreichende Kühlung der Leitschaufeln 11 gegeben ist. Dabei stellt sich der Abströmwinkel an den Leitschaufeln 11 so ein, dass die Laufschaufeln 13 an ihren Vorderkanten 17 mit einem Zuströmwinkel angeströmt werden, der dem Auslegungszuströmwinkel entspricht. Bei der Auslegung der Leitschaufel 11 ist berücksichtigt, dass der Massenstrom von der Kühlluft so ausreichend groß ist, dass durch die Kühlwirkung der Kühlluft auf die Leitschaufeln 11 eine thermische Überbeanspruchung der Leitschaufel 11 unterbunden ist und dennoch die Laufschaufeln 13 optimal angeströmt werden.

Durch das druckseitige Ausströmen der Kühlluft durch die Kühlluftaustrittsöffnung 25 im Bereich der Hinterkanten 16 der Leitschaufeln 11 ist die Umlenkwirkung der Leitschaufeln 11 verstärkt. Somit wird im Teillastbetrieb der Gasturbine 11 das im Volllastbetrieb angedrosselte Drosselventil 20 geöffnet, wodurch sich der Massenstrom der Kühlluft durch die Kühlluftaustrittsöffnungen 25 erhöht. Als Folge hiervon erhöht sich die Umlenkwirkung der Leitschaufeln 11.

Hinsichtlich des notwendigen Kühlungseffekts durch die Kühlluft wäre eine derartige Erhöhung des Massenstroms der Kühlluft nicht erforderlich. Die Erhöhung des Massenstroms der Kühlluft bewirkt zusätzlich eine Verstärkung der Umlenkwirkung der Leitschaufel 11, wodurch der Umlenkwinkel der Leitschaufeln 11 durch eine entsprechende Wahl des Massenstroms der Kühlluft unter Betätigung des Drosselventils 20 eingestellt werden kann.

Im Teillastbetrieb der Gasturbine, bei dem die Umlenkwirkung der Leitschaufeln 11 nachteilig herabgesetzt ist, wird das Drosselventil 20 geöffnet, im Extremfall vollständig geöffnet, wodurch der Massenstrom durch die Kühlluftaustrittsöffnungen 25 vergrößert wird. Dadurch wird im Teillastbetrieb der Gasturbine 1 die Umlenkwirkung der Leitschaufeln 11 vorteilhaft vergrößert, wobei die Vorderkanten 17 der Leitschaufeln 13 optimal angeströmt und die Leitschaufeln 11 ausreichend gekühlt werden.

Im Teillastbetrieb der Gasturbine 1 steht im Verdichterplenum 5 eine größere Menge an der Verdichterluft zur Verfügung als im Volllastbetrieb, da im Teillastbetrieb an der Brennkammer 3 Verdichterendluft vorbeigeführt wird, um beim Absenken der Turbineneintrittstemperatur ein zu starkes Abfallen der Flammtemperatur zu vermeiden und Verbrennungsinstabilitäten zu unterbinden. Diese überschüssige Verdichterendluft steht vorteilhaft zum Zuführen zu den Leitschaufeln 11 zur Verfügung. Im extremen Teillastbetrieb der Gasturbine 1 ist das Drosselventil 20 ungedrosselt gestellt, so dass der höchste Kühlluftmassenstrom den Leitschaufeln 11 zugeführt wird. Wird hingegen die Gasturbine 1 bei Volllast betrieben, so ist das Drosselventil 20 angedrosselt, wodurch der Massenstrom der Kühlluft reduziert ist. Diese Reduzierung des Massenstroms der Kühlluft ist so zu wählen, dass stets sowohl eine ausreichende Kühlung als auch eine ausreichende Umlenkwirkung der Leitschaufeln 11 beim Betrieb der Gasturbine 1 bewirkt werden.

Das Kühlluftreservoir 22 wirkt als ein Pufferbehälter für die Kühlluft, so dass von dem Kühlluftreservoir 22 ein stark instationärer Bedarf an der Kühlluft beim Betrieb der Gasturbine 1 kompensiert werden kann. Außerdem ist die Größe des Volumens des Kühlluftreservoirs so gewählt, dass das Niveau der Strömungsgeschwindigkeiten in dem des Kühlluftreservoir niedrig sind.

## Patentansprüche

1. Gasturbine mit einer Turbinenstufe (8), mit einer von einem Kühlmedium gekühlt betreibbaren Leitschaufel (11) und einer Kühlmediumszuführeinrichtung (19 bis 24) zum Zuführen des Kühlmediums in das Innere der Leitschaufel (11), die im Bereich ihrer Hinterkante (16) an ihrer Druckseite (18) mindestens eine Kühlmediumsaustrittsöffnung (25) hat, durch die das Kühlmedium aus dem Inneren der Leitschaufel (11) in die Hauptströmung ausströmbar ist,
wobei die Kühlmediumszuführeinrichtung (19 bis 24) eine Massenstromsteuerungseinrichtung (20) zum Steuern des Massenstroms durch die mindestens eine Kühlmediumsaustrittsöffnung (25) aufweist, mit der der Massenstrom durch die mindestens eine Kühlmediumsaustrittsöffnung (25) im Teillastbetrieb der Gasturbine (1) verglichen mit dem Volllastbetrieb der Gasturbine (1) vergrößerbar ist.

2. Gasturbine gemäß Anspruch 1,
wobei die Massenstromsteuerungseinrichtung ein Drosselventil (20) zur Massenstromsteuerung aufweist und die Leitschaufel (11) im Volllastbetrieb für einen von dem Drosselventil (20) angedrosselten Massenstrom des Kühlmediums ausgelegt ist.

3. Gasturbine gemäß Anspruch 2,
wobei die Leitschaufel (11) im Teillastbetrieb für einen von dem Drosselventil (20) ungedrosselten Massenstrom des Kühlmediums ausgelegt ist.

4. Gasturbine gemäß einem Anspruch 2 oder 3,
wobei das Kühlmedium Verdichterendluft und die Massenstromsteuerungseinrichtung (20) von dem Verdichterende mit der Verdichterendluft gespeist ist.

5. Gasturbine gemäß Anspruch 4,
wobei die Verdichterendluft im Teillastbetrieb der Gasturbine (1) an deren Brennkammer (3) vorbeigeführt ist.

6. Gasturbine gemäß einem der Ansprüche 1 bis 5,
wobei die Leitschaufel (11) einen Kühlmediumseintritt (23), durch die das Kühlmedium in das Innere der Leitschaufel (11) einströmbar ist, und ein Kühlmediumsreservoir (22) aufweist, mit dem am Kühlmediumseintritt (23) das Kühlmedium von der Massenstromsteuerungseinrichtung (20) bereitgestellt ist.

7. Gasturbine gemäß einem der Ansprüche 1 bis 6,
wobei die Massenstromsteuerungseinrichtung (20) von dem Verdichterplenum (5) der Gasturbine (1) gespeist ist.

8. Gasturbine gemäß einem der Ansprüche 1 bis 7,
wobei die Leitschaufel die erste, unmittelbar stromab der Brennkammer (3) der Gasturbine (1) angeordnete Leitschaufel (11) der ersten Turbinenstufe (8) der Gasturbine (1) ist.

9. Verfahren zum Kühlen einer Turbinenstufe (8) einer Gasturbine (1) gemäß einem der Ansprüche 1 bis 8, mit den Schritten:
- Betreiben der Gasturbine (1) im Teillastbetrieb;
- Steuern der Massenstromsteuerungseinrichtung (20), dass der Massenstrom durch die mindestens eine Kühlmediumsaustrittsöffnung (25) erhöht ist verglichen mit dem Massenstrom durch die mindestens eine Kühlmediumsaustrittsöffnung (25) im Volllastbetrieb der Gasturbine (1).

10. Verfahren gemäß Anspruch 9,
wobei der Massenstrom derart eingestellt wird, dass der Teillastbetrieb der Gasturbine (1) in Bezug auf den thermodynamischen Wirkungsgrad und/oder den Anströmwinkel der stromab der Leitschaufel (11) angeordneten Laufschaufel (13) und/oder die Abgastemperatur der Turbine der Gasturbine (1) und/oder die Flammstabilität in der Brennkammer (3) der Gasturbine (1) optimiert ist.
